# EUROPEAN PATENT APPLICATION

(11) **EP 1 347 030 A1**
(43) Date of publication of application: **24.09.2003**
(21) Application number: 01271421.8
(22) Date of filing: 18.12.2001
(51) Int. Cl.: C09K 3/00, B41M 5/26, G11B 7/26, G11B 7/24

(54) **LIGHT ABSORBING AGENT**

(30) Priority: 19.12.2000 JP 2000385772; 20.09.2001 JP 2001287233
(71) Applicant: Kabushiki Kaisha Hayashibara Seibutsu Kagaku Kenkyujo, Okayama-shi, Okayama 700-0907 (JP)
(72) Inventor: KOYAMA, Y. Kabushiki Kaisha Hayashibara Seibutsu, Okayama-shi, Okayama 700-0907 (JP); AIZAWA, Y. Kabushiki Kaisha Hayashibara Seibutsu, Okayama-shi, Okayama 700-0907 (JP); KAWATA, T. Kabushiki Kaisha Hayashibara Seibutsu, Okayama-shi, Okayama 700-0907 (JP); YASUI, S. Kabushiki Kaisha Hayashibara Seibutsu, Okayama-shi, Okayama 700-0907 (JP)
(74) Representative: Daniels, Jeffrey Nicholas
(86) International application number: JP0111107
(87) International publication number: WO02050210

(57) **Abstract**

The object of the present invention is to provide light absorbents which exert superior electrical properties in organic optical recording media and to uses thereof, and is solved by providing light absorbents comprising the first polymethine dye having an organic metal complex anion as a counter ion and a monomethine or polymethine chain intramolecularly, the second polymethine dye having an anion, as a counter ion, other than organic metal complex anions and a monomethine or polymethine chain intramolecularly, and a formazane metal complex; optical recording media which use the light absorbents; and a process for producing optical recording media which comprise a step of forming a homogeneous thin layer comprising the light absorbents on a substrate.

## Description

### Technical Field

The present invention relates to light absorbents, and more particularly, to light absorbents which are useful in optical recording media.

### Background Art

In a multimedia age, optical recording media such as CD-R (a write-once memory using compact disc) and DVD-R (a write-once memory using digital video disc) are now greatly highlighted. Optical recording media can be roughly classified into inorganic optical recording media which have recording layers composed of inorganic substances such as tellurium, selenium, or rhodium; and organic optical recording media which have recording layers mainly composed of light absorbents containing organic dye compounds.

Among these optical recording media, organic optical recording media can be usually prepared by dissolving a polymethine dye in an organic solvent such as 2,2,3,3-tetrafluoro-1-propanol (abbreviated as "TFP" hereinafter), spun coating the solution on the surface of a polycarbonate substrate, drying the solution to form a recording layer, and sequentially forming and coating onto the surface of the recording layer a reflection layer comprising a metal such as gold, silver or copper, and a protection layer comprising an ultraviolet ray hardening resin. When compared with inorganic optical recording media, organic ones may have the disadvantage that their recording layers are susceptible to change under environmental lights such as artificial- and natural-lights. Organic optical recording media, however, have the advantage that they can be made into optical recording media at a lesser cost because their recording layers can be directly formed by coating light absorbents in solution on the surface of substrates. Further, organic optical recording media composed of organic materials are now mainly used as low-cost optical recording media because they are substantially free of corrosion even when contacted with moisture or sea water and because information recorded therein in a prescribed format can be read out by using commercially available read-only readers, after the establishment of thermal-deformation-type optical recording media, a kind of organic optical recording media.

What is urgently required in organic optical recording media is to increase their storage capacity to suit this multimedia age. The research for such an increment, which is now being eagerly continued in this field, is to shorten the wavelength of a laser beam for writing information from a wavelength of 775-795 nm, that is irradiated by conventional GaAlAs semiconductor lasers, to a wavelength of 700 nm or shorter. However, since most of polymethine dyes developed for CD-Rs could not appropriately write and read information by using a laser beam with a wavelength of 700 nm or shorter when used in high-density optical recording media such as DVD-Rs, the polymethine dyes could not fulfil the need for high-storage density required in many fields.

Another problem with a high-storage density of optical recording media is an electrical property of polymethine dyes in optical recording media. Most of conventional polymethine dyes developed for DVD-Rs are not satisfied with desirable electrical properties such as sensitivity, resolution, and jitter to a laser beam with a wavelength of 700 nm or shorter when used alone or in combination with a light-resistant improver.

In view of the foregoing, the object of the present invention is to provide light absorbents, which satisfactorily exert electrical properties in organic optical recording media, and uses thereof.

### Disclosure of Invention

The present inventors eagerly studied and screened compounds. As a result, they found that an optical recording was realized by using in combination with the first polymethine dye having an organic metal complex anion as a counter ion and a monomethine or polymethine chain intramolecularly; the second polymethine dye having an anion, as a counter ion, other than organic metal complex anions and a monomethine or polymethine chain intramolecularly; and a formazane metal complex even in using a writing light with a relatively low output power.

The present invention solves the above object by providing light absorbents comprising the first polymethine dye having an organic metal complex anion as a counter ion and a monomethine or polymethine chain intramolecularly; the second polymethine dye having an anion, as a counter ion, other than organic metal complex anions and a monomethine or polymethine chain intramolecularly; and a formazane metal complex.

Further, the present invention solves the above object by providing optical recording media using the aforesaid light absorbents.

Furthermore, the present invention solves the above object by providing processes for preparing optical recording media through a step of forming a uniform thin layer comprising the light absorbents on a substrate.

### Brief Description of Drawings

FIG. 1 shows visible absorption spectra of the light absorbents of the present invention when formed in a solution (a solid line) and in a thin layer (a broken line), respectively.
FIG. 2 is a rough drawing of optical recording media comprising a substrate 1, a recording layer 2, a reflection layer 3, and a protection plate 4 used in an experiment.

### Best Mode of the Invention

As mentioned above, the present invention relates to the light absorbents comprising the first polymethine dye having an organic metal complex anion as a counter ion and a monomethine or polymethine chain intramolecularly; the second polymethine dye having an anion, as a counter ion, other than organic metal complex anions and a monomethine or polymethine chain intramolecularly; and a formazane metal complex. Concretely explaining, the first and second polymethine dyes used in the present invention usually have structures represented by Formulae 1 and 2, respectively. 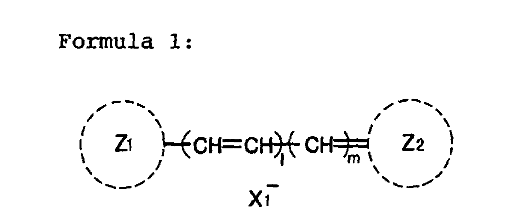 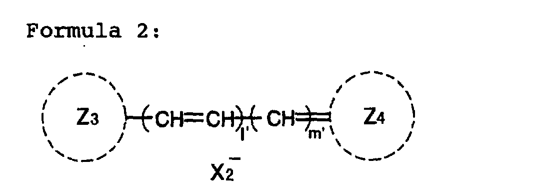 "l" and "m" in Formula 1 and "l'" and "m'" in Formula 2 independently represent integers of 0 or 1, and "l" and "m" or "l'" and "m'" are not 0 at the same time, respectively. In Formula 1, Z₁ represents an optionally substituted heterocycle and Z₂ represents a heterocycle or aromatic ring which is identical to or different from Z₁. In Formula 2, Z₃ represents an optionally substituted heterocycle and Z₄ represents an optionally substituted heterocycle or aromatic ring which is identical to or different from Z₃. The heterocycles in Z₁, Z₂, Z₃, and Z₄ are monocyclic- or polycyclic-heterocycles which comprise one or more heteroatoms selected from those of the 15 or 16 group in the periodic law table such nitrogen, oxygen, sulfur, selenium, and tellurium; an indole, benzindole, indolenin, benzindolenin, oxazole, benzoxazole, thiazole, benzthiazole, benzimidazole, or quinoline ring. The heterocycles in Z₂ and Z₄ may be the same heterocycles as in Z₁ and Z₃ and may be other heterocycles, for example, a pyridine and quinoline rings. The aromatic rings in Z₂ and Z₄ are selected from monocyclic- or polycyclic-heterocycles, which have a benzene ring as a unit such as a benzene, naphthalene, anthracene, and phenanthrene rings.

Thus, the polymethine dyes of the present invention are organic dye compounds with any of monomethine, dimethine and trimethine chains which are combined with identical or different cyclic nuclei at their both ends. In the first and second polymethine dyes of the present invention, the cation structures in the polymethine dyes can be similar each other so far as the counter ions are the prescribed anions in Formulae 1 and 2. The structures are, for example, those of monomethine- or trimethine-cyanine dyes represented by Formula 4 and those of styryl dyes represented by Formula 5. "n" in Formula 4 represents an integer of 0 or 1.

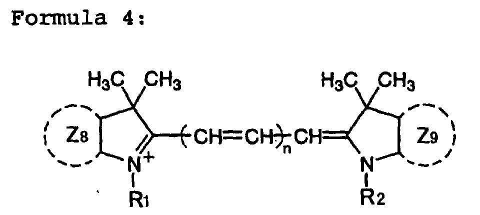

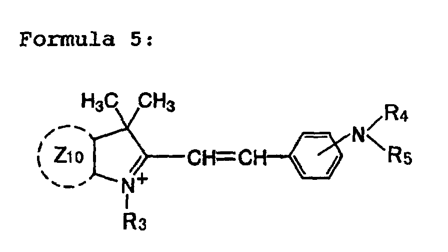

Z₈ and Z₉ in Formula 4 independently represent a condensed benzene ring or a condensed naphthalene ring to form a benzoindolenine skeleton. Z₁₀ in Formula 5 also represents a condensed benzene ring or a condensed naphthalene ring to form a benzoindolenine skeleton similar to Z₈ and Z₉ in Formula 4. These condensed rings optionally have one or more substituents. Examples of such are aliphatic hydrocarbon groups such as methyl, ethyl, propyl, isopropyl, butyl, isobutyl, *sec*-butyl, *tert*-butyl, pentyl, isopentyl, neopentyl, and *tert*-pentyl groups; aromatic hydrocarbon groups such as phenyl, *o*-tolyl, *m*-tolyl, *p*-tolyl, xylyl, mesityl, *o*-cumenyl, *m*-cumenyl, and *p*-cumenyl groups; ether groups such as methoxy, ethoxy, propoxy, isopropoxy, buthoxy, isobuthoxy, *sec*-buthoxy, *tert*-buthoxy, pentyloxy, phenoxy, and benzyloxy groups; ester groups such as methoxycarbonyl, ethoxycarbonyl, propoxycarbonyl, acetoxy, and benzoyloxy groups; alkylsulfamoyl groups such as methylsulfamoyl, dimethylsulfamoyl, ethylsulfamoyl, diethylsulfamoyl, propylsulfamoyl, dipropylsulfamoyl, isopropylsulfamoyl, diisopropylsulfamoyl, butylsulfamoyl, and dibutylsulfamoyl groups; alkylsulfonyl groups such as methylsulfonyl, ethylsulfonyl, propylsulfonyl, isopropylsulfonyl, butylsulfonyl, isobutylsulfonyl, *sec*-butylsulfonyl and *tert*-butylsulfonyl groups; halogens such as fluorine, chlorine, bromine, and iodine; and other substituents such as nitro and cyano groups. If the substituents have hydrogens, one or more of the hydrogens can be substituted, for example, with halogens such as fluorine, chlorine, bromine, and iodine; ether groups such as methoxy, ethoxy, propoxy, isopropoxy, buthoxy, isobuthoxy, *sec*-buthoxy, *tert*-buthoxy, pentyloxy, phenoxy, and benzyloxy groups; aromatic hydrocarbon groups such as phenyl, *o*-tolyl, *m*-tolyl, *p*-tolyl, xylyl, mesityl, *o*-cumenyl, *m*-cumenyl, and *p*-cumenyl groups; and other substituents such as carboxy, cyano, and nitro groups.

R₁ and R₂ in Formula 4 represent aliphatic hydrocarbon groups which optionally have one or more substituents. R₃ in Formula 5 also represents an optionally substituted aliphatic hydrocarbon group similar to R₁ and R₂ in Formula 4. The aliphatic hydrocarbon groups in R₁, R₂ and R₃ represent those having up to 12 carbon atoms, usually, from one to eight carbon atoms such as methyl, ethyl, vinyl, ethynyl, propyl, isopropyl, isopropenyl, 1-propenyl, 2-propenyl, 2-propynyl, butyl, isobutyl, *sec-*butyl*, tert*-butyl, 2-butenyl, 1,3-butadienyl, pentyl, isopentyl, neopentyl, *tert*-pentyl, 1-methylpentyl, 2-methylpentyl, 2-penten-4-ynyl, hexyl, isohexyl, 5-methylhexyl, heptyl, and octyl groups. One or more hydrogens in the aliphatic hydrocarbon groups are optionally substituted, for example, with aromatic hydrocarbon groups such as phenyl, *o*-tolyl, *m*-tolyl, *p*-tolyl, xylyl, mesityl, *o*-cumenyl, *m*-cumenyl, and *p*-cumenyl groups; ether groups such as methoxy, ethoxy, propoxy, isopropoxy, buthoxy, isobuthoxy, *sec*-buthoxy, *tert*-buthoxy, pentyloxy, phenoxy, and benzyloxy groups; halogens such as fluorine, chlorine, bromine, and iodine; and other substituents such as carboxy, nitro, and cyano groups.

R₄ and R₅ in Formula 5 independently represent hydrogen or an appropriate substituent. Examples of such a substituent in R₄ and R₅ are aliphatic hydrocarbon groups such as methyl, ethyl, propyl, isopropyl, butyl, isobutyl, *sec*-butyl, *tert*-butyl, pentyl, isopentyl, neopentyl, and *tert*-pentyl groups; alicyclic hydrocarbon groups such as cyclopropyl, cyclobutyl, cyclopentyl, cyclohexyl, and cyclohexenyl groups; and aromatic hydrocarbon groups such as phenyl, *o*-tolyl, *m*-tolyl, *p*-tolyl, xylyl, mesityl, *o*-cumenyl, *m*-cumenyl, and *p*-cumenyl groups. One or more hydrogens in the substituents are optionally substituted, for example, with ether groups such as methoxy, ethoxy, propoxy, isopropoxy, buthoxy, isobuthoxy, *sec*-buthoxy, *tert*-buthoxy, pentyloxy, phenoxy, and benzyloxy groups; ester groups such as methoxycarbonyl, ethoxycarbonyl, propoxycarbonyl, acetoxy, and benzoyloxy groups; amino groups such as methylamino, dimethylamino, ethylamino, diethylamino, propylamino, dipropylamino, isopropylamino, diisopropylamino, butylamino, dibutylamino, isobutylamino, diisobutylamino, *sec*-butylamino, *tert*-butylamino, pentylamino, anilino, diphenylamino, *o*-toluidino, *m*-toluidino, *p*-toluidino, xylidino, piperidino, piperazino, and morpholino groups; halogens such as fluorine, chlorine, bromine, and iodine; and other substituents such as cyano and nitro groups. R₄ and/or R₅ can form a cyclic structure which can include either only the nitrogen atom which they combine with or also benzene rings to which the nitrogen atom combine, for example, a pyrrolidine, piperidine, morpholine, julolidine, or tetrahydroquinoline ring.

X₁ ⁻ in Formula 1 represents an organic metal complex anion. Examples of such are those of azo, bisphenyldithiol, thiocatechol chelate, thiobisphenolate chelate, and bisdiol- α -diketone. Preferable organic metal complex anions are azo organic metal complex anions which have metal atoms as central atoms, where the metal atom combines with one or more azo complexes as a ligand. Examples of the azo organic metal complex anions are those represented by Formula 6.

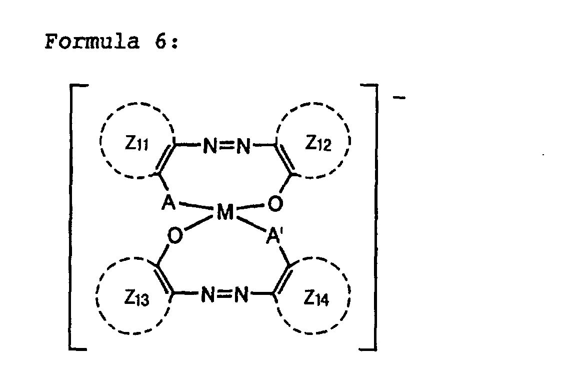

Z₁₁, Z₁₂, Z₁₃, and Z₁₄ in Formula 6 independently represent identical or different aromatic rings or heterocycles which optionally have one or more substituents. Preferable aromatic rings are monocyclic benzene rings, and preferable heterocycles are those which comprise one or more heteroatoms selected from nitrogen, oxygen, sulfur, selenium, and tellurium atoms; for example, an isoxazolon, imidazole, benzimidazole, indazolon, indandione, oxazolone, thiazole, benzthiazole, thionaphthene, tetrahydroquinoline, barbituric acid, hydantoin, pyrazolone, pyridine, pyridone, rhodanine, and julolidine skeletons.

The aromatic rings and heterocycles optionally have one or more substituents, for example, aliphatic hydrocarbons such as methyl, ethyl, propyl, isopropyl, butyl, isobutyl, *sec*-butyl, *tert*-butyl, pentyl, isopentyl, neopentyl, and *tert*-pentyl groups; aromatic hydrocarbon groups such as phenyl, *o*-tolyl, *m*-tolyl, *p*-tolyl, xylyl, mesityl, *o*-cumenyl, *m*-cumenyl, and *p*-cumenyl groups; ester groups such as methoxycarbonyl, trifluoromethoxycarbonyl, ethoxycarbonyl, propoxycarbonyl, acetoxy, trifluoroacetoxy, and benzoyloxy groups; amino groups such as methylamino, dimethylamino, ethylamino, diethylamino, propylamino, dipropylamino, isopropylamino, diisopropylamino, butylamino, dibutylamino, isobutylamino, diisobutylamino, *sec*-butylamino, *tert*-butylamino, pentylamino, anilino, diphenylamino, *o*-toluidino, *m*-toluidino, *p*-toluidino, xylidino, piperazino, piperidino, pirrolidino, and morpholino groups; alkylsulfamoyl groups such as methylsulfamoyl, dimethylsulfamoyl, ethylsulfamoyl, diethylsulfamoyl, propylsulfamoyl, dipropylsulfamoyl, isopropylsulfamoyl, diisopropylsulfamoyl, butylsulfamoyl, and dibutylsulfamoyl groups; and other substituents such as cyano and nitro groups.

Depending on uses, one or more hydrogens in the substituents are optionally substituted, for example, with aliphatic hydrocarbons such as methyl, ethyl, propyl, isopropyl, butyl, isobutyl, *sec*-butyl, *tert*-butyl, pentyl, isopentyl, neopentyl, and *tert*-pentyl groups; aromatic hydrocarbon groups such as phenyl, *o*-tolyl, *m*-tolyl, *p*-tolyl, xylyl, mesityl, *o*-cumenyl, *m*-cumenyl, and *p*-cumenyl groups; ether groups such as methoxy, ethoxy, propoxy, isopropoxy, buthoxy, isobuthoxy, *sec*-buthoxy, *tert*-buthoxy, pentyloxy, phenoxy, and benzyloxy groups; halogens such as fluorine, chlorine, bromine, and iodine; and other substituents such as carboxy, cyano, and nitro groups.

As described above, azo organic metal complex anions represented by Formula 6 can be obtained by combining a metal atom of M as a central atom with two identical or different azo compounds as a ligand. The metal atom is usually selected from metal elements of the 3 to 12 groups in the periodic law table such as scandium, yttrium, titanium, zirconium, hafnium, vanadium, niobium, tantalum, chrome, molybdenum, tungsten, manganese, technetium, rhenium, iron, ruthenium, osmium, cobalt, rhodium, iridium, nickel, palladium, platinum, copper, silver, gold, zinc, cadmium, and mercury. In the field of optical recording media, cobalt, and nickel are usually used because they are easily available and handlable. A and A' in Formula 6 represent identical or different hetero atoms selected from elements of the 16 group in the periodic law table such as oxygen, sulfur, selenium, and tellurium, which can form a coordinate bond by providing an electron pair to a metal atom, and the hetero atoms compose an atomic group combined with Z₁₁ and Z₁₄.

The azo organic metal complexes are, for example, those represented by Chemical Formulae 1 and 2. All of the azo organic metal complex anions represented by Chemical Formulae 1 and 2 can be obtained in a satisfactory yield in accordance with conventional manners which provide aniline or aniline derivatives in the diazo coupling reaction and allow to react the resulting azo compounds in the presence of appropriate metal salts and bases. Polymethine dyes with azo organic metal complex anions as a counter ion are prepared by heating polymethine dyes with anions, as a counter ion, other than the azo organic metal complex anions and salts of the metal complex anions in an appropriate solvent at over ambient temperature for 0.1-10 hours under stirring conditions.

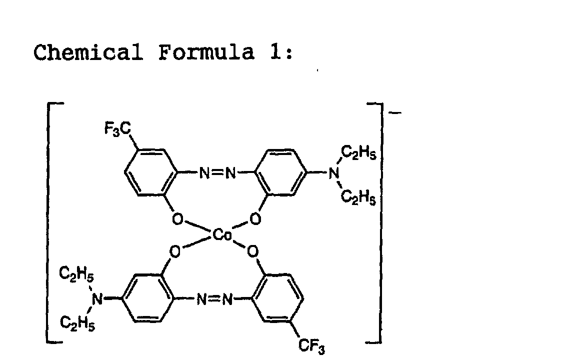

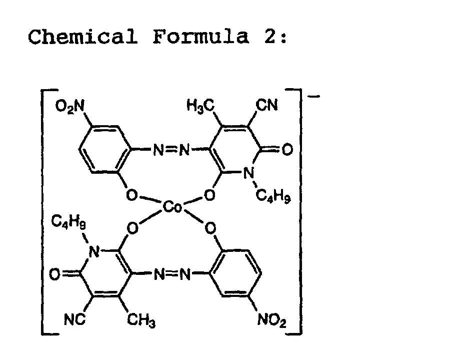

As described above, X₂⁻ in Formula 2 represents an anion other than the organic metal complex anions. Depending on uses, X₂⁻ is not particularly limited except that it should be an anion other than the metal complex anions and can be appropriately selected by heat properties such as a melting point, decomposition point and calorific value. When used in optical recording media, anions which don't substantially deteriorate reflection layers comprising metals are selected, for example, inorganic acid ions such as phosphoric acid, perchrolic acid, periodic acid, phosphoric acid hexafluoride, antimony hexafluoride, tin acid hexafluoride, fluoroboric acid, and tetrafluoroboric acid ions; and organic acid ions such as thiocyanic acid, benzensulfonic acid, naphthalenesulfonic acid, *p*-toluenesulfonic acid, alkylsulfonic acid, benzencarboxylic acid, alkylcarboxylic acid, trihaloalkylcarboxylic acid, alkylsulfonic acid, trihaloalkylsulfonic acid, and nicotinic acid ions.

To preferably carry out the present invention, the first polymethine dyes are those represented by Chemical Formulae 3 to 8, and the second polymethine dyes are those represented by Chemical Formulae 9 to 20.

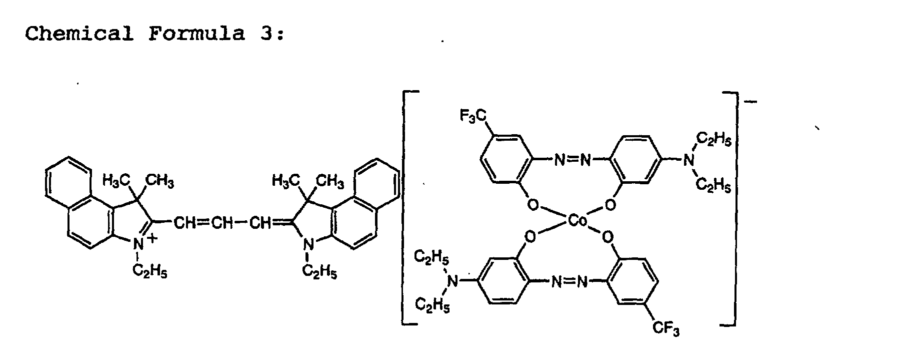

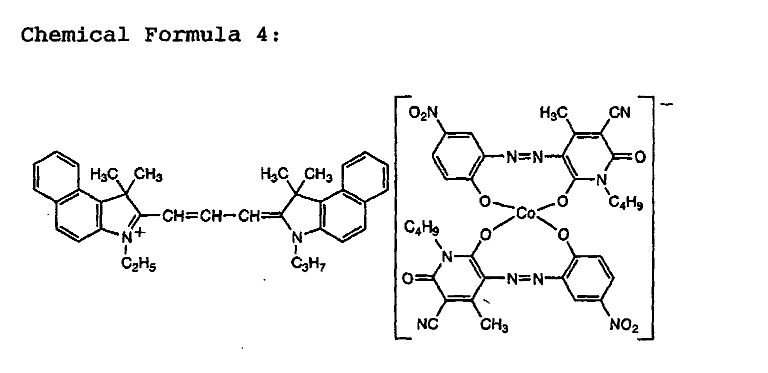

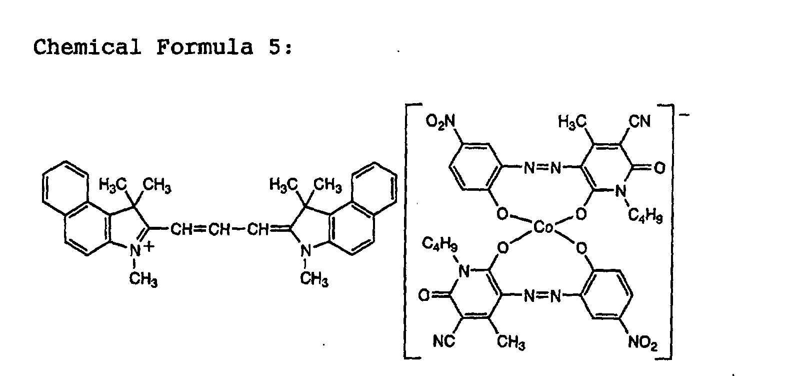

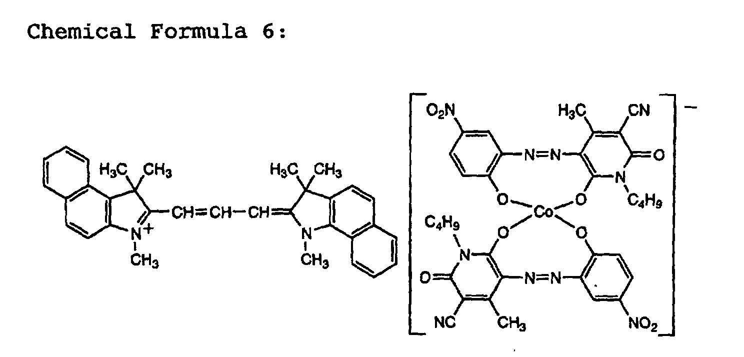

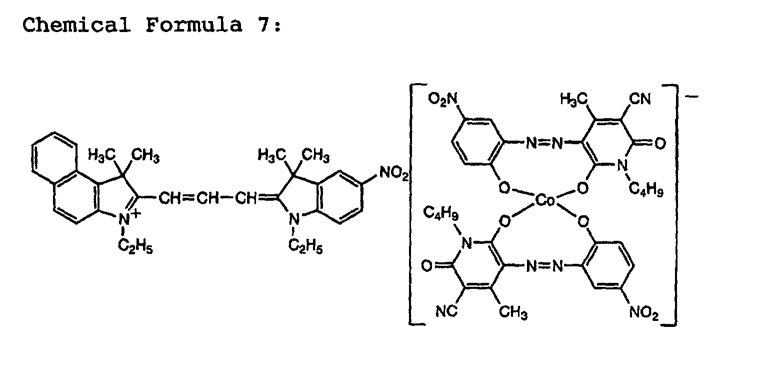

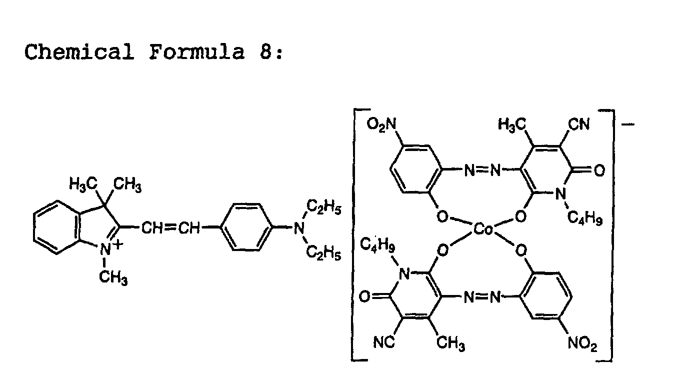

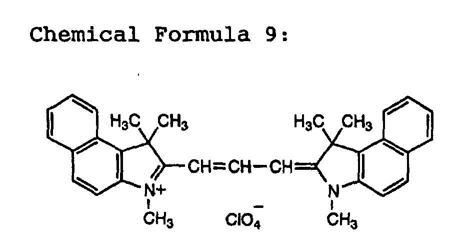

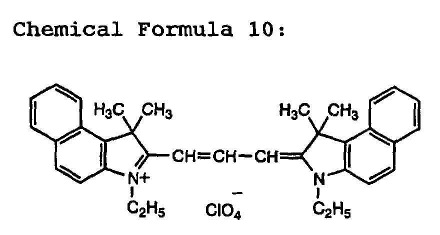

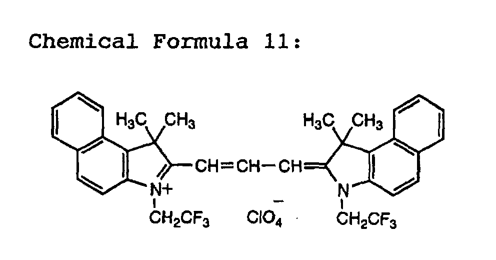

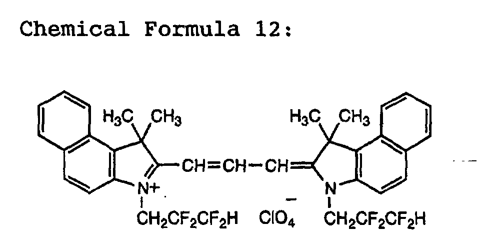

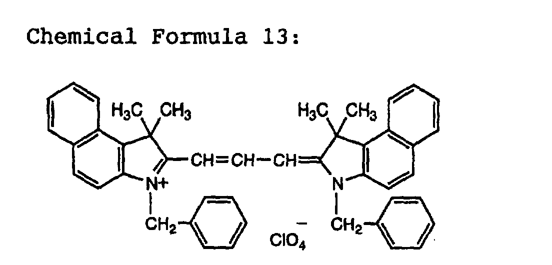

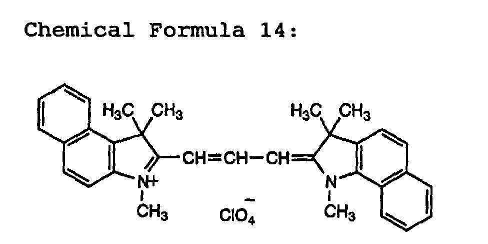

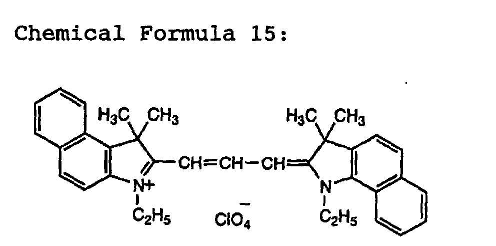

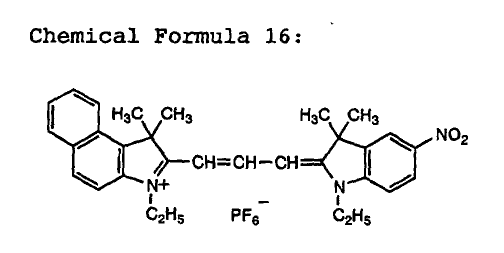

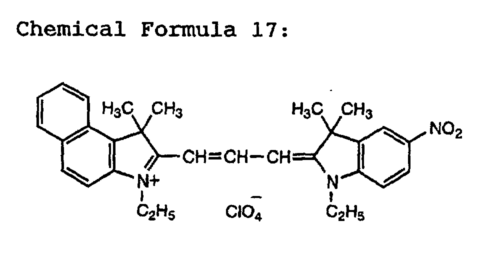

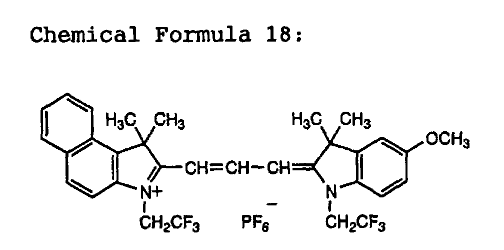

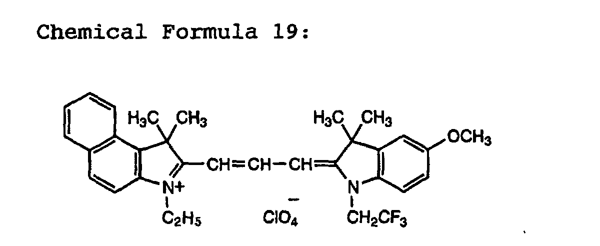

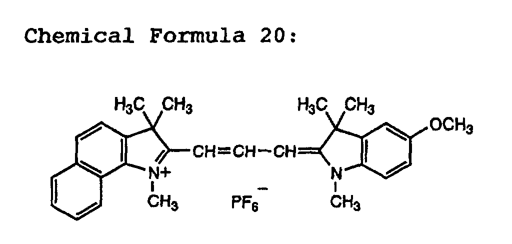

The formazane metal complexes of the present invention mean all complexes which have metal atoms as a central atom and which combine with one or more formazane compounds or their tautomers as a ligand. Preferable formazane metal complexes are ones with a group of formazane compounds represented by Formula 3 or their tautomers as a ligand.

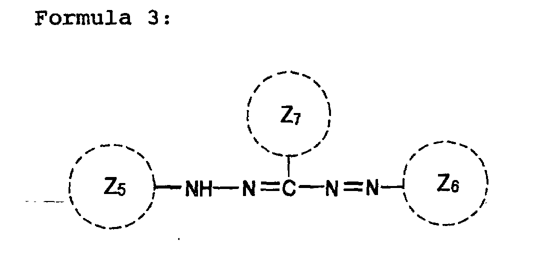

In Formula 3, Z₅ represents a pyridine ring which optionally have one or more substituents. Examples of such are aliphatic hydrocarbon groups such as methyl, ethyl, propyl, isopropyl, butyl, isobutyl, *sec*-butyl, *tert*-butyl, pentyl, isopentyl, neopentyl, and *tert*-pentyl groups; ether groups such as methoxy, ethoxy, propoxy, isopropoxy, buthoxy, isobuthoxy, *sec*-buthoxy, *tert*-buthoxy, pentyloxy, phenoxy, and benzyloxy groups; amino groups such as methylamino, dimethylamino, ethylamino, diethylamino, propylamino, dipropylamino, isopropylamino, diisopropylamino, butylamino, dibutylamino, isobutylamino, diisobutylamino, *sec*-butylamino, *tert*-butylamino, pentylamino, anilino, *o*-toluidino, *m*-toluidino, *p*-toluidino, xylidino, piperidino, piperazino, and morpholino groups; halogens such as fluorine, chlorine, bromine, and iodine; and other substituents such as cyano and nitro groups. One or more hydrogen atoms in their substituents are optionally substituted, for example, with aliphatic hydrocarbon groups such as methyl, ethyl, propyl, isopropyl, butyl, isobutyl, *sec*-butyl, *tert*-butyl, pentyl, isopentyl, neopentyl, and *tert*-pentyl groups; ether groups such as methoxy, ethoxy, propoxy, isopropoxy, buthoxy, isobuthoxy, *sec*-buthoxy, *tert*-buthoxy, pentyloxy, phenoxy, and benzyloxy groups; halogens such as fluorine, chlorine, bromine, and iodine; ester groups such as methoxycarbonyl, trifluoromethoxycarbonyl, ethoxycarbonyl, propoxycarbonyl, acetoxy, trifluoroacetoxy, and benzoyloxy groups; and aromatic hydrocarbon groups such as phenyl, *o*-tolyl, *m*-tolyl, *p*-tolyl, xylyl, mesityl, *o*-cumenyl, *m*-cumenyl, *p*-cumenyl and biphenylyl groups.

Z₆ in Formula 3 represents an aromatic ring or heterocycle. Examples of the aromatic ring are benzene ring, naphthalene ring, and anthracene ring, and examples of the heterocycle are imidazole ring, banzoimidazole ring, quinoline ring, isoquinoline ring, oxazole ring, benzoxazole ring, thiazole ring, benzothiazole ring, piperazine ring, pyridine ring, pyridazine ring, and pyrimidine ring, and these aromatic rings and heterocycles optionally have one or more substituents similar to Z₅.

Z₇ in Formula 3 represents a pyridine ring, furan ring or aliphatic hydrocarbon group, and the pyridine and furan rings optionally have one or more substituents similar to Z₅. The aliphatic hydrocarbon group in Z₇ is usually selected from those having one to five carbon atoms such as methyl, ethyl, propyl, isopropyl, butyl, isobutyl, *sec*-butyl, *tert*-butyl, pentyl, isopentyl, neopentyl, and *tert*-pentyl groups, and one or more hydrogen atoms in the aliphatic hydrocarbon group are optionally substituted, for example, with halogens such as fluorine. The halogen atoms of the imino group in formazane compounds is migratory in general, and thus, among formazane compounds represented by Formula 3 in which Z₅ and Z₆ each have an different asymmetric structure, meaning that there exist two tautomers theoretically. The formazane compounds of the present invention includes all these tautomers unless specified otherwise. When the formazane compounds of the present invention exist as an equilibrated mixture of these tautomers, they may be only expressed with either of their tautomers according to usual manner in this field, unless need arises.

The formazane metal complexes of the present invention are usually composed by coordinating one or more of the above formazane compounds or their tautomers with metals as a central atom. Examples of the metals as a central atom are generally metal elements of the 3 to 10 groups in the periodic law table such as scandium, yttrium, titanium, zirconium, hafnium, vanadium, niobium, tantalum, chromium, molybdenum, tungsten, manganese, technetium, rhenium, iron, cobalt, nickel, rubidium, rhodium, palladium, osmium, iridium, platinum, copper, gold, zinc, cadmium, and mercury; or their oxide and halide such as fluoride, chloride, bromide, and iodide. Among of them, nickel, zinc, cobalt, iron, copper, palladium, their oxide and halide are usually used because of their cost and easiness to obtain.

Preferable formazane metal complexes are ones having a divalent metal (M) as a central atom, particularly, the complexes represented by Formula Fzₚ(X₃)_{q}. In Formula Fzₚ(X₃)_{q}, Fz represents a formazane compound represented by Formula 3 or the tautomer, and "p" is the number of formazane compounds or the tautomers as a ligand (Fz) that coordinate with M, and usually it is an integer of 1 or 2. X₃ is an appropriate counter ion, and "q" is the number of X₃ to keep an equivalence of electric charge in the complexes. The formazane metal complexes of the present invention usually have an electric charge of -2, 0 or 1. When the electric charge is 0, q is 0, meaning that no X₃ exists. Examples of the counter ion X₃ are the following ions; anions such as phosphoric acid hexafluoride ion, fluoric acid ion, hydrochloric acid ion, bromic acid ion, iodic acid ion, phosphoric acid ion, perchloric acid ion, periodic acid ion, antimony hexafluoride ion, tin acid hexafluoride ion, fluoroboric acid ion, tetrafluoroborate ion, thiocyanic acid ion, benzensulfonic acid ion, naphthalenesulfonic acid ion, benzencarboxylic acid ion, alkylcarboxylic acid ion, trihaloalkylcarboxylic acid ion, alkylsulfonic acid ion, trihaloalkylsulfonic acid ion, and nicotinic acid ion; and cations such as ammonium ion and tetraalkylammonium ion.

Examples of the formazane metal complexes of the present invention are the nickel complexes represented by Chemical Formulae 21 to 24.

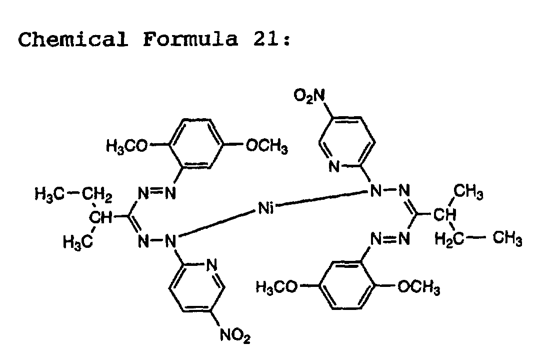

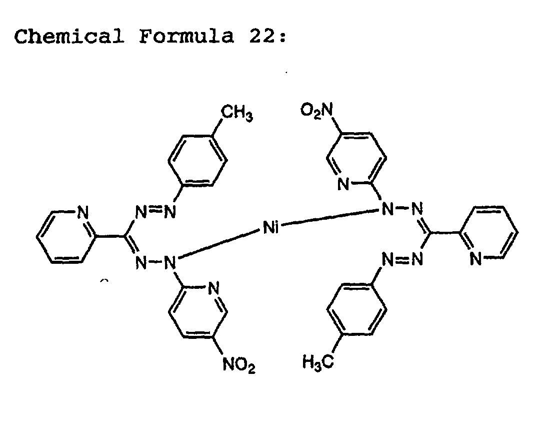

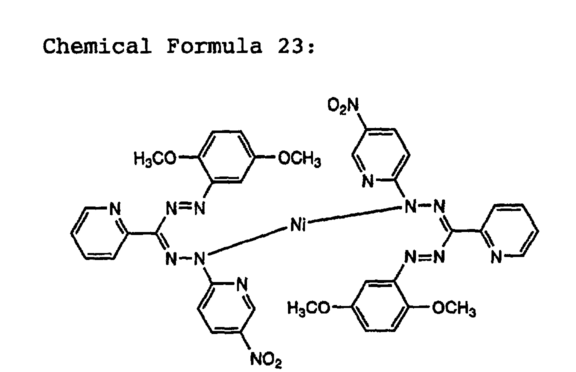

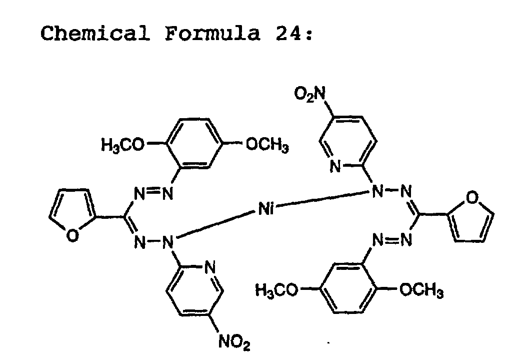

The polymethine cyanine dyes and the formazane metal complexes represented by Chemical Formulae 3 to 24 are examples, and the first and second polymethine dyes and formazane metal complexes of the present invention should not be limited to these - examples. In addition, compounds disclosed in Japanese Patent Application Nos. 343,211/99 (title of the invention "Styryl Dyes"), 358,949/99 (title of the invention "Styryl Dyes"), 81,541/00 (title of the invention "Cyanine Dyes"), 41,001/00 (title of the invention "Cyanine Dyes"), 46,570/00 (title of the invention "Cyanine Dyes"), 143,035/00 (title of the invention "Styryl Dyes"), 145,313/00 (title of the invention "Formazane Metal Complexes"), 203,873/00 (title of the invention "Styryl Dyes"), 328,344/00 (title of the invention "Light-resistant Improvers") applied for by the present applicant and the compounds obtained according to preparations disclosed in these applications can be advantageously used in the present invention, as well as those represented by Chemical Formulae 3 to 24.

The light absorbent of the present invention comprises the above first and second polymethine dyes and a formazane metal complex. As to a composition ratio, one % (w/w) or more of the first polymethine dye, usually, 5-50 % (w/w), can be incorporated into the second polymethine dye while increasing or decreasing the ratio in an optical recording medium, depending on uses and kinds of polymethine dyes and formazane metal complexes to be incorporated. Further, 0.1 % (w/w) or more of formazane metal complex(es), usually, 1-20 % (w/w), can be incorporated into the total amount of the first and second polymethine dyes while increasing or decreasing the ratio. As to the weight ratio of the first polymethine dye to the second polymethine dye, for example, in optical recording media, depending on uses, the greater the ratio of the first polymethine dye becomes, the lower the electrical properties such as sensitivity and jitter become, and the higher the durability becomes. When the volume of formazane metal complexes is too much or less, desirable electrical properties are difficult to obtain. Therefore, in optical recording media, the first and second polymethine dyes and formazane metal complexes are usually, desirably used in the above range so as to make the light absorbents of the present invention exert desirable electrical properties. The first and second polymethine dyes and the formazane metal complexes in the light absorbents of the present invention may be uniformly combined in final products such as optical recording media, and therefore, two or three of them can be combined at a desirable ratio prior to use and each ingredient can be separately added while regulating their ratios to be desirable in an applied object on use. The first and second polymethine dyes and the formazane metal complexes may be respectively a single compound or composition mixed with plural compounds.

Within the scope of the object of the present invention, the light absorbents of the present invention can combine one or more other organic dye compounds which substantially absorb a visible light, conventional materials used in optical recording media such as light-resistant improvers, binders, dispersing agents, flame retardants, lubricants, antistatic agents, surfactants, thermal interference inhibitors, plasticizers, and solvents.

As to other organic dye compounds incorporated into the light absorbents of the present invention, they are not specifically limited as long as they substantially absorb a visible light and regulate the light reflection- and the light absorption-rates of optical recording media. Examples of the organic dye compounds are acridine dye, azaannulene dye, azo dye, anthraquinone dye, indigo dye, indanthrene dye, oxazine dye, xanthene dye, dioxazine dye, styryl dye, thiazine dye, thioindigo dye, tetrapolphyradine dye, triphenylmethane dye, triphenothiazine dye, naphthoquinone dye, phthalocyanine dye, benzoquinone dye, benzopyran dye, benzofuranone dye, porphyrin dye, and rhodamine dye such as cyanine dye which the same or different rings are bound to the both ends of a polymethine chain such as monomethine, dimethine, trimethine, and pentamethine chains. These chain and rings optionally have one or more substituents. Examples of the rings are imidazolin ring, imidazole ring, banzoimidazole ring, α -naphthoimidazole ring, β-naphthoimidazole ring, indole ring, isoindole ring, indolenine ring, isoindolenine ring, benzoindolenine ring, pyridinoindolenine ring, oxazoline ring, oxazole ring, isoxazole ring, benzoxazole ring, pyridinoxazole ring, α-naphthoxazole ring, β-naphthoxazole ring, selenazoline ring, selenazole ring, benzoselenazole ring, α-naphthoselenazole ring, β-naphthoselenazole ring, thiazoline ring, thiazole ring, isothiazole ring, benzothiazole ring, α-naphthothiazole ring, β-naphthothiazole ring, tellurazoline ring, tellurazole ring, benzotellurazole ring, α-naphthotellurazole ring, β -naphthotellurazole ring, acridine ring, anthracene ring, isoquinoline ring, isopyrrole ring, imidanoxaline ring, indandione ring, indazole ring, indaline ring, oxadiazole ring, carbazole ring, xanthene ring, quinazoline ring, quinoxaline ring, quinoline ring, chroman ring, cyclohexanedion ring, cyclopentandion ring, cinnoline ring, thiodiazole ring, thiooxazolidone ring, thiophene ring, thionaphthene ring, thiobarbituric ring, thiohydantoin ring, tetrazole ring, triazine ring, naphthalene ring, naphthyridine ring, piperazine ring, pyrazine ring, pyrazole ring, pyrazoline ring, pyrazolidine ring, pyrazolone ring, pyran ring, pyridine ring, pyridazine ring, pyrimidine ring, pyrylium ring, pyrrolidine ring, pyrroline ring, pyrrole ring, phenazine ring, phenanthridine ring, phenanthrene ring, phenanthroline ring, phthalazine ring, pteridine ring, furazane ring, furan ring, purine ring, benzene ring, benzoxazine ring, benzopyran ring, morpholine ring, and rhodanine ring. Preferable dyes are pentamethine and heptamethine cyanine dyes, particularly, pentamethine indocyanine dye. Examples of the cyanine dyes are those disclosed in Japanese Patent Application No. 105,332/99, titled "Cyanine Dyes", Japanese Patent Application No. 119,142/99, titled "Cyanine Dyes", Japanese Patent Application No. 285,123/99, titled "Cyanine Dyes", and Japanese Patent Application No. 62,572/00, titled "Cyanine Dyes". When used in combination with the first and second polymethine dyes, the cyanine dyes are used in an amount of, usually, 0.1-20 % (w/w), desirably, 1-10 % (w/w), to the total amount of the polymethine dyes while increasing or decreasing the percentage.

The light-resistant improvers are, for example, nitroso compounds such as nitrosodiphenylamine, nitrosoaniline, nitrosophenol, and nitrosonaphthol, tetracyanoquinonedimethane compounds, and diiminium compounds, which all can be arbitrarily used in combination, if necessary. As the light absorbents of the present invention have relatively-high light resistance, the light-resistant improvers are not needed, or the volume can be reduced.

As the light absorbents of the present invention have the absorption maxima at a visible region and substantially absorb a visible light with a wavelength of 700 nm or shorter and have relatively-high light-resistance to environmental lights such natural- and artificial-lights, they have various uses in many fields, for example, optical recording media, photochemical polymerization, solar battery, and dyeing, which need organic dye compounds with such properties. Among these uses, the light absorbents of the present invention are particularly useful as materials for composing recording layers of high-density optical recording media such as DVD-Rs which use a visible light with a wavelength of 700 nm or shorter, more particularly, a laser beam with a wavelength of 400-450 nm or 630-680 nm.

Explaining the uses of the light absorbents of the present invention in optical recording media, the optical recording media of the present invention can be prepared by forming a uniform thin layer including the light absorbents of the present invention on a substrate in accordance with the methods for conventional optical recording media, because the light absorbents do not require any special treatment and handling when used in optical recording media. For example, the light absorbents of the present invention are dissolved in organic solvents, and the solutions are uniformly coated over either surface of substrates by means of spraying, soaking, roller coating, or rotatory coating method; and dried to form a recording layer, a thin layer comprising light absorbents, and if necessary, followed by forming a reflection layer to be closely attached onto the recording layer using metals such as gold, silver, copper, platinum, aluminium, cobalt, tin, nickel, iron, and chromium or conventional organic materials for reflection layers to give a reflectance of 45% or more, and preferably 55% or more; and spun coating over the recording layer ultraviolet-ray-hardening resins or thermosetting resins, which contain flame retardants, stabilizers, and/or antistatic agents; and then hardening the coated resins by either irradiating light or heating to form a protection layer to be closely attached onto the reflection layer to protect the recording layer from scratches, dusts, spoils, etc. Thereafter, if necessary, a pair of the above substrates with recording-, reflection-, and protection-layers are faced and attached together using, for example, adhesives or viscous sheets; or protection plates, which are comprising the same materials and shapes as the substrates, are attached to the protection layers of the substrates.

The light absorbents of the present invention have satisfactorily-high solubility in fluorine solvents such as TFP and many organic solvents other than fluorine solvents without substantially causing undesirable problems in actual use, and do not particularly limit the types of organic solvents used for coating the light absorbents on substrates. Thus, in the preparation of optical recording media according to the present invention, appropriate organic solvents can be selected from the following conventional ones which are arbitrarily used in combination, if necessary. TFP frequently used to prepare optical recording media and the following organic solvents other than TFP: For example, hydrocarbons such as hexane, cyclohexane, methylcyclohexane, dimethylcyclohexane, ethylcyclohexane, isopropylcyclohexan, *tert*-butylcyclohexane, cyclooctane, benzene, toluene, and xylene; halides such as chloroform, 1,2-dichloroethane, 1,2-dibromoethane, trichloroethylene, tetrachloroethylene, chloroenzene, bromobenzene, and α-dichlorobenzene; alcohols and phenols such as methanol, ethanol, 2,2,2-trifluoroethanol, 2-methoxyethanol (methyl cellosolve), 2-ethoxyethanol (ethyl cellosolve), 2-isopropoxy-1-ethanol, 1-propanol, 2-propanol, 1-methoxy-2-propanol, 1-ethoxy-2-propanol, 1-butanol, 1-methoxy-2-butanol, isobutyl alcohol, pentyl alcohol, isopentyl alcohol, 2,2,3,3,4,4,5,5,-octafluoropentanol, cyclohexanol, diethylene glycol, triethylene glycol, propylene glycol, glycerin, diacetone alcohol, phenol, benzyl alcohol, and cresol; ethers such as diethyl ether, diisopropyl ether, tetrahydrofuran, tetrahydropyran, 1,4-dioxane, anisole, 1,2-dimethoxyethane, diethylene glycol dimethyl ether, dicyclohexyl-18-crown-6, methylcarbitol, and ethylcarbitol; ketones such as furfural, acetone, ethyl methyl ketone, and cyclohexanone; esters such as ethyl acetate, butyl acetate, ethylene carbonate, propylene carbonate, and trimethyl phosphate; amides such as formamide, N-methylformamide, N,N-dimethylformamide, and hexamethylphosphoric triamide; nitriles such as acetonitrile, propionitrile, succinonitrile, and benzonitrile; nitro compounds such as nitromethane and nitrobenzene; amines such as ethylene diamine, triethylamine, pyridine, piperidine, morpholine, and N-methylpyrrolidone; and sulfur-containing compounds such as dimethylsulfoxide and sulfolane.

Since the light absorbents of the present invention have relatively-high solubilities in easily volatile organic solvents such as TFP, they are substantially free from crystallization of polymethine dyes or formazane metal complexes when they are sequentially dissolved in the organic solvents, coated on substrates, and dried; and do not cause inconsistent thickness and surface of the formed recording layers. When the light absorbents of the present invention dissolve in alcohols such as methyl cellosolve, ethyl cellosolve and diacetone alcohol, and the obtained solutions are coated on the plastic substrates; the solvents neither damage the substrates nor pollute the environment as the advantage. Particularly, when used in combination with one or more fluorine solvents, for example, aliphatic alcohol fluoride such as TFP, 2,2,3,3,4,4-hexafluoro-1-butanol, and 2,2,3,3,4,4,5,5,-octafluoro-1-pentnol, and one or more non-fluorine solvents, for example, ether solvents such as diethylether, diisopropylether, and dibuthylether; ketone solvents such as acetone, ethyl methyl ketone, methylisobuthylketone, cyclohexanone, and isophorone; alcohol solvents such as methanol, ethanol, 2-methoxyethanol, 2-ethoxyethanol, 1-propanol, 1-buthanol, and diacetone alcohol; nitrile solvents such as acetonitrile and propionitrile; ester solvents such as ethyl acetate and butyl acetate; hydrocarbon solvents such as dichloromethane, chloroform, carbon tetrachloride, 1,1,2,2-tetracholoroethane, hexane, heptane, and octane; and sulfur-containing compounds such as dimethylsulfoxide; the solubility of the light absorbents of the present invention is not substantially lowered, and optical recording media with superior electrical properties are obtained in a higher yield, and furthermore, the volume of fluorine solvents which are deemed as a cause of environmental pollution can be remarkably lowered. In this case, a composition ratio of a fluorine solvent and a non-fluorine solvent is usually increased or decreased in the range from 1:99 to 99:1 as a volume ratio, preferably, from 10:90 to 90:10, more preferably, from 20:80 to 80:20, while considering the solubility of light absorbents as a solute and viscosity of solution. Methods to form a thin layer containing the light absorbents of the present invention on a substrate are not limited to a method to coat a solution of an organic solvent and can be arbitrarily selected other conventional methods such as vacuum deposition, chemical vapor deposition (CVD), sputtering, and atomic layer epitaxy (ALE), if necessarily.

Conventional substrates can be used in the present invention and usually processed with appropriate materials, for example, into discs, 12 cm in diameter and 0.1-1.2 mm in thickness, to suit final use by the methods such as compression molding, injection molding, compression-injection molding, photopolymerization method (2P method), thermosetting integral method, and lightsetting integral method. These discs can be used singularly or plurally after they are arbitrarily attached together with adhesive sheets or adhesive agents, etc. In principal, any materials for substrates can be used in the present invention as long as they are substantially transparent and have light transmissivity of at least 80%, and preferably 90% or more at the wavelengths ranging from 400 nm to 800 nm. Examples of such materials are glasses, ceramics, and others such as plastics including polyacrylate, polymethyl acrylate, polycarbonate, polystyrene (styrene copolymer), polymethylpenten, polyester, polyolefin, polyimide, polyetherimide, polysulfone, polyethersulfone, polyarylate, polycarbonate/polystyrene-alloy, polyestercarbonate, polyphthalatecarbonate, polycarbonatediethylene-glycol, epoxy resin, and phenol resin, where polycarbonate is most frequently used. In plastic substrates, concaves for expression of synchronizing signals and addresses of tracks and sectors are usually transferred to the internal circle of the tracks during their formation. The present invention does not limit the form of concaves which are desirably formed to give 0.3-0.8 micrometer (µm) in average wide and 70-200 nm in depth.

In a rotatory coating method which is frequently used in the field, the light absorbents of the present invention can be prepared into 0.5-5%(w/w) solutions of the organic solvents as mentioned above while considering viscosity of the solutions which are uniformly coated on substrates to form recording layers with 10-1,000 nm, preferably, 50-300 nm in thickness after drying. Prior to the coating, preliminary layers can be formed on the substrates to improve the protection and the adhesion ability of the substrates, if necessary. Materials of the preliminary layers are, for example, relatively-high-molecular substances such as ionomer resins, polyamide resins, vinyl resins, natural resins, silicon, and liquid rubbers. In the case of using binders, the following conventional polymers can be used alone or in combination by weight of 0.01-10 times of the light absorbent(s): Cellulose esters such as nitrocellulose, cellulose phosphate, cellulose sulfate, cellulose acetate, cellulose propionate, cellulose lactate, cellulose palmitate, and cellulose acetate/propionate; cellulose ethers such as methyl cellulose, ethyl cellulose, propyl cellulose, and butyl cellulose; vinyl resins such as polystyrene, poly (vinyl chloride), poly(vinyl acetate), poly(vinyl acetal), poly(vinyl butyral), poly(vinyl formal), poly(vinyl alcohol), and poly(vinyl pyrrolidone); copolymer resins such as styrene-butadiene copolymers, styrene-acrylonitrile copolymers, vinyl chloride-vinyl acetate copolymers, and maleic anhydride copolymers; acrylic resins such as poly(methyl methacrylate), poly(methyl acrylate), polyacrylate, polymethacrylate, polyacrylamide, and polyacrylonitrile; polyesters such as poly(ethylene terephthalate); and polyolefins such as polyethylene, chlorinated polyethylene, and polypropylene.

Explaining the method for using the optical recording media according to the present invention, the high-density optical recording media of the present invention such as DVD-Rs can write information at a relatively-high density by using a visible light with a wavelength of 700 nm or shorter, more particularly, a laser beam with a wavelength of around 400-450 nm or 630-680 nm irradiated by semiconductor lasers such as those of GaN, AlGaInP, GaAsP, GaAlAs, InGaP, InGaAsP, and InGaAlP; or a YAG laser in combination with a second harmonics generating element (SHG element). To read recorded information, laser beams with wavelengths identical to or slightly longer or shorter than those used for writing information are used. As to a laser power for writing and reading information, in the optical recording media of the present invention, it is desirably be set to a relatively-high level, which exceeds the threshold of the energy required for forming pits, in writing information; while it is desirably be set to a relatively-low level, i.e., a level of below the threshold when used in reading recorded information, although the power levels can be varied depending on types and ratios of the polymethine dyes and the formazane metal complexes used: Generally, the levels can be controlled to outputs of over 5 mW for writing, usually, in the range of 6-20 mW, and to outputs of 5 mW or lower for reading, usually, in the range of 0.1-3 mW. The recorded information are read by detecting with a light pick-up manner the changes of both the reflection light level and the transmission light level in the pits and the pit-less part on the surface of optical recording media.

Accordingly, in the optical recording media of the present invention, stable and minute pits with a pit width of below 0.834 µm and a track pitch of below 1.6 µm used in a conventional CD-R, can be formed at a relatively-high density by using the light pick-up manner by a visible light with a wavelength of 700 nm or shorter, particularly, a laser beam with a wavelength of around 400-450 nm or 630-680 nm. For example, in using a disc substrate, 12 cm in diameter, it can realize an extremely-high density optical recording medium with an optical recording capacity far exceeding 0.682 GB (giga bytes) per one side, i.e., that can record about two hours of information of movies and animations, which polymethine dyes for CD-Rs could hardly attain.

Since the optical recording media of the present invention can record information of characters, images, sound, and digitals at a relatively-high density, they are advantageously useful as recording media for professional and family uses to record and store for documents, data, and computer software. Particular examples of the types of industries and the forms of information to which the optical recording media can be applied are drawings of construction and engineering works, maps, ledgers of loads and rivers, aperture cards, architectural sketches, documents of disaster protection, wiring diagrams, arrangement plans, information of newspapers and magazines, local information, and construction specifications, which all relate to construction and engineering works; blueprints, ingredient tables, prescriptions, product specifications, product price tables, parts lists, information for maintenance, case study files of accidents and problems, manuals for claims, production schemes, technical documents, sketches, details, company's house-made product files, technical reports, and analysis reports, which are all used in productions; customers information, information of business connections, information of companies, contracts, information of newspapers and magazines, business reports, company's credit research, and stock lists, which are all used in sales; information of companies, records of stock prices, statistical documents, information of newspapers and magazines, contracts, customers lists, documents of application/notification/licenses/authorization, and business reports, which are all used in money; information of real property and transportations, sketches of construction, maps, local information, information of newspapers and magazines, contracts for lease, information of companies, stock lists, traffic information, and information of business connections, which are all used in real property and transportations; diagrams of writings and pipe arrangements for electric and gas supplies, documents of disaster protection, tables of operation manuals, documents of investigations, and technical reports; medical charts, files of clinical histories and case studies, and diagrams for medical care/institution relationships; scientific papers, records in academic societies, monthly reports of research, research data, documentary records and indexes thereof, which are all used in universities, colleges, and research institutes; inspection data, literatures, patent publications, weather maps, analytical records of data, and customers files, which are all used for information; case studies on laws; membership lists, history notes, records of works/products, competition data, and data of meetings/congresses, which are all used in several organizations/associations; sightseeing information and traffic information, which are all used for sightseeing; indexes of homemade publications, information of newspapers and magazines, who's who files, sport records, telop files, and scripts, which are all used in mass communications and publishing; and maps, ledgers of roads and rivers, fingerprint files, resident cards, documents of application/notification/license/authorization, statistical documents, and public documents, which are all used in government offices. Particularly, the write-once type optical recording media of the present invention can be advantageously useful for storing records of charts and official documents, which should never be falsified and deleted, as well as electronic libraries for art galleries, libraries, museums, broadcasting stations, etc.

As a rather specific use, the optical recording media of the present invention can be used to edit and proofread compact discs, digital video discs, laser discs, MD (a mini disc as an information recording system using photomagnetic disc), CDV (a laser disc using compact disc), DAT (an information recording system using magnetic tape), CD-ROM (a read-only memory using compact disc), DVD-ROM (a read-only memory using digital video disc), DVD-RAM (a writable and readable memory using digital video disc), digital photos , movies, video software, audio software, computer graphics, publishing products, broadcasting programs, commercial messages, game software, etc.; and used as external program recording means for large size of computers and car navigation systems.

Hereinbefore, the use of the light absorbents of the present invention in the field of optical recording media has been mainly explained with reference to their application examples to organic optical recording media which use a visible light with a wavelength of 700 nm or shorter as a writing light. However, in the field of optical recording media, the light absorbents of the present invention can be also advantageously used as materials for changing or regulating the optical absorption rate or the optical reflection rate in the existing optical recording media such as CD-Rs other than high-density optical recording media such as DVD-Rs by using in combination, for example, with one or more other organic dye compounds which substantially absorb a laser beam with a wavelength of around 775-795 nm. When applied to organic optical recording media using a visible light with a wavelength of 700 nm or shorter as a writing light, the polymethine dyes of the present invention can be used not to directly form pits on substrates but to indirectly form pits in such a manner that the excitation energy of a laser beam with a wavelength of around 400-450 nm or 630-680 nm is allowed to transfer to the aforesaid organic dye compounds via the polymethine dyes by using the dyes along with one or more other organic dye compounds which substantially absorb a laser beam with a longer wavelength, e.g., a laser beam with a wavelength of around 775-795 nm, resulting in a decomposition of the organic dye compounds. The optical recording media as referred to in the present invention mean optical recording media in general which use the characteristic of the light absorbents of the present invention, i.e., a substantial absorption of a visible light with a wavelength of 700 nm or shorter in addition to thermal-deformed optical recording media, thermal coloration method using the chemical reaction of coloring agents and developers using the heat generated when organic dye compounds absorb light, and the technique called "moth-eye type technique" which uses the phenomenon of that the above heat smooths the pattern of periodical unevenness provided on the surface of the substrates.

Since the polymethine dyes of the present invention substantially absorb a visible light with a wavelength of 700 nm or shorter, the light absorbents of the present invention containing the polymethine dyes can be advantageously used in the aforesaid optical recording media and also used as materials for polymerizing polymerizable compounds by exposure to visible light, sensitizing solar batteries, materials for laser active substances in dye lasers, and for dying clothes. If necessary, in combination with one or more other light absorbents capable of absorbing light in ultraviolet, visible and/or infrared regions, the light absorbents can be used in clothes in general and others including building/bedding/decorating products such as a drape, lace, casement, print, casement cloth, roll screen, shutter, shop curtain, blanket, thick bedquilts including comforter, peripheral material for the thick bedquilts, cover for the thick bedquilts, cotton for the thick bedquilts, bed sheet, cushion, pillow, pillow cover, cushion, mat, carpet, sleeping bag, tent, interior finish for car, and window glasses including car window glass; sanitary and health goods such as a paper diaper, diaper-covers, eyeglasses, monocle, and lorgnette; internal base sheets, linings, and materials for shoes; wrappers; materials for umbrellas; parasols; stuffed toys; lighting devices; filters, panels and screens for information displaying devices such as televisions and personal computers which use cathode-ray tubes, liquid crystal displays, electroluminescent displays, and plasma displays; sunglasses; sunroofs; sun visors; pet bottles; refrigerators; vinyl houses; lawns; optical fibers; prepaid cards; and windows of ovens including electric ovens. When used as wrapping materials, injection materials, and vessels for the above products, the light absorbents of the present invention prevent living bodies and products from problems and discomforts induced by environmental lights such as natural- and artificial-lights or minimize their problems and discomforts. Furthermore, they can advantageously regulate the chromaticity, color, tint, and appearance and control the light reflected by or passed through products to the desired color balance.

The following examples describe the light absorbents of the present invention:

### Example 1

### Light absorbent

### Example 1-1

### Preparation of light absorbent

According to the combination in Table 1, the first polymethine dye, the second polymethine dye, and a formazane metal complex, and an optional pentamethine or heptamethine cyanine dye, represented by any one of Chemical Formulae 25 to 28 as a wavelength regulating agent to correct the light absorption property, are uniformly mixed to obtain a light absorbent.

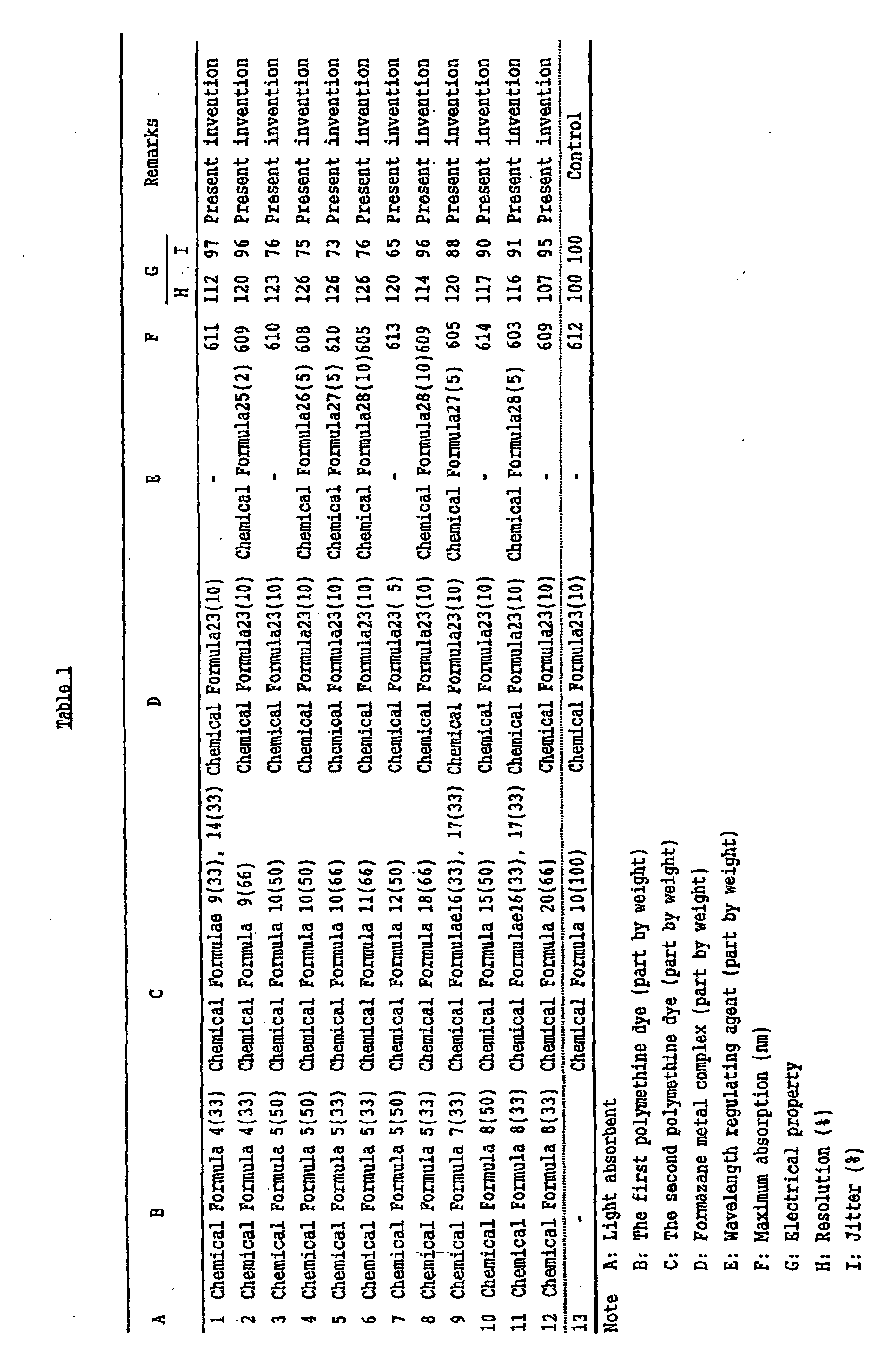

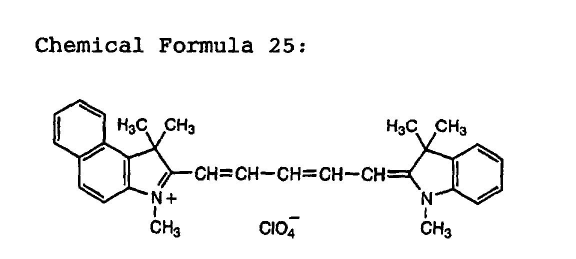

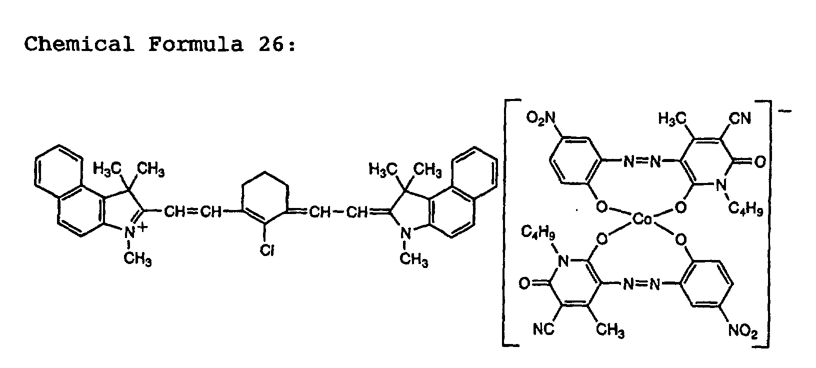

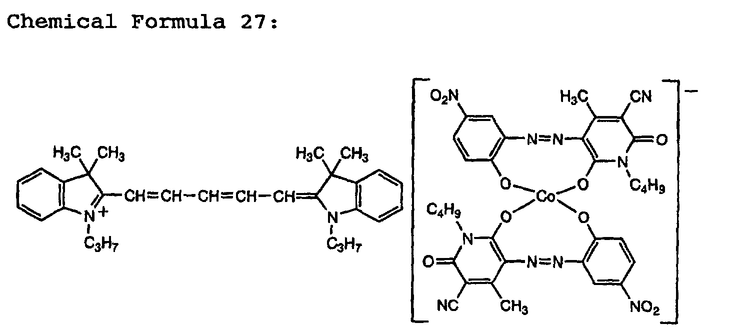

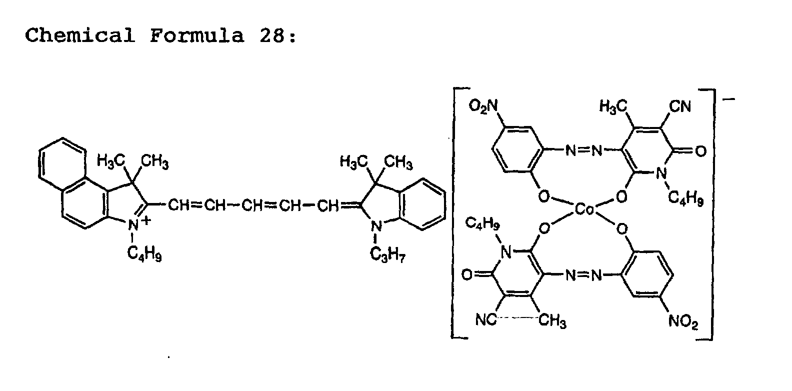

### Example 1-2

### Light absorption property

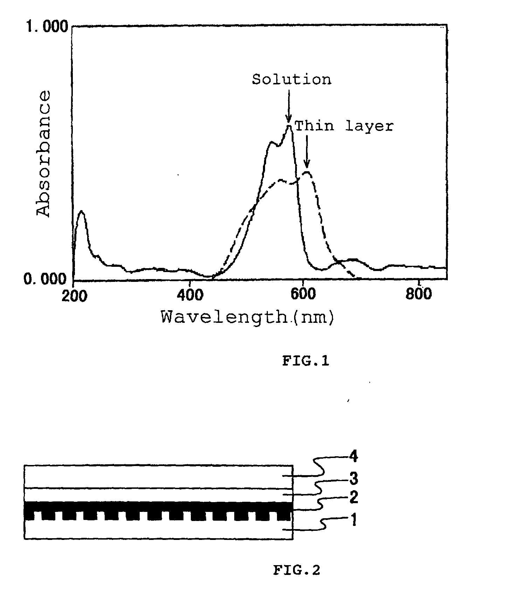

The light absorbents 1 to 12 in Table 1 were in a conventional manner measured for visible absorption spectra by using an appropriate volume of TFP to decide their absorption maxima. The results are also in Table 1. FIG.1 shows visible absorption spectra when formed in a thin layer (a broken line) and in a methanol solution (a solid line) of the light absorbent 10 of the present invention, respectively

As shown in Table 1 and FIG. 1, all the light absorbents of the present invention which were measured had the absorption maxima at a wavelength of under 700 nm when formed in a thin layer, in particular, at a wavelength of around 600 nm, and had the absorption ends at the side of longer-wavelength area extended to around 700 nm. These results showed that the light absorbents substantially absorb a visible light with a wavelength of 700 nm or shorter in optical recording media, particularly, a laser beam with a wavelength of around 630-680 nm.

### Example 1-3

### Electrical property

As shown in FIG.2, an optical recording medium, which a substrate 1, recording layer 2, reflection layer 3, and protection plate 4 were laminated in this order, was prepared in a conventional manner. Either of the light absorbents 1 to 12 in Table 1 was added to TFP to give a concentration of 2.0%(w/w), and the mixture was heated for a while, followed by ultrasonically dissolving the contents. The resulting each solution was in a conventional manner homogeneously coated in a rotatory manner over one side of a polycarbonate disc substrate 1, 12 cm in diameter and 0.6 mm in thickness, and dried to form a recording layer 2 with a thickness of 100 nm. Thereafter, the substrate 1 was spattered with silver to form a reflection layer 3, 30-100 nm in thickness, to be closely attached on the surface of the recording layer 2 by vaporization, and a polycarbonate disc protection plate 4, 12 cm in diameter and 0.6 mm in thickness, was attached to the reflection layer 3 by using a conventional adhesive to prepare an optical recording medium for a test. In parallel, an optical recording media using a light absorbent 13 without the first polymethine dye was provided as a control system.

A test signal with a square wavelength and a frequency of 40 MHz was in a conventional manner recorded in the 13 types of optical recording media prepared above by using a commercially available optical disc drive machine "DDU-1000 TYPE", produced by Pulstec Industrial Co.,Ltd., Shizuoka, Japan, having a writing wavelength of 658 nm and a writing power of around 9 mW. I13/I14 and jitter in reading the written test signal at a wavelength of 650 nm, a reading power of 1 mW, were respectively measured by using a commercial optical disc appraisable system, DVD-R CATS SA 300 TYPE, commercialized by ALTECH Co.,Ltd., Tokyo, Japan. When I13/I14 and jitter obtained by using the light absorbent 13 as a control were set to 100, respectively, percentages of those obtained by using the light absorbents 1 to 12 of the present invention were calculated as indexes for improvement of resolution and jitter. The results are also in Table 1.

The results of Table 1 show that the resolution and jitter of the optical recording media can be remarkably improved by using the light absorbents of the present invention. All of the light absorbents of the present invention measured have significantly-lower jitters and remarkably-higher I13/I14 as an important index of resolution than a control. In view of a writing power around 9 mW, the above results show that optical recording having a small jitter and superior resolution can be realized by using the light absorbents of the present invention even in using a writing light with relatively-low output. Though data is not shown, pentamethine cyanine dyes are usually preferable in durability, if pentamethine or heptamethine cyanine dyes are used with the light absorbent of the present invention as a wavelength regulating agent.

### Example 2

### Optical recording media

Either of the light absorbents 1 to 12 in Table 1 was added to TFP to give a concentration of 2.0%(w/w), and the mixture was heated for a while, followed by ultrasonically dissolving the contents. The resulting each solution was in a conventional manner filtrated by a membrane, homogeneously coated in a rotatory manner over one side of a polycarbonate disc substrate, 12 cm in diameter, 0.6 mm in thickness, to which had been transferred concaves, 0.74 µm in track pitch, 0.03µm in width, 175 nm in depth, for expressing synchronizing signals and addresses of tracks and sectors by an injection molding, and dried to form a recording layer with a thickness of 100 nm. Thereafter, the substrate was spattered with silver to form a reflection layer, 30-100 nm in thickness, to be closely attached on the surface of the recording layer by vaporization, and the reflection layer was homogeneously coated in a rotatory manner with "DAICURE CLEAR SD1700", as a known ultraviolet ray hardening resin commercialized by Dainippon Ink and Chemicals, Inc., Tokyo, Japan, and irradiated to form a protection layer to be closely attached on the surface of the reflection layer. Thereafter, a pair of substrates laminated in order recording-, reflection-, and protection layers was prepared and both of the reflection layers were closely attached by using a conventional adhesive, followed by obtaining 12 types of optical recording media.

The optical recording media of the example, which have superior electrical properties such as sensitivity, resolution, and jitter, have a recording capacity of over four GB per one side and can record large amounts of information of documents, images and voices, as well as other digital information at a relatively-high density by using the light pick-up manner with a visible light with a wavelength of 700 nm or shorter, particularly, a laser beam with a wavelength of around 630-680 nm. Electron microscopic observation of the recorded surface of the optical recording media which recorded information by using a semiconductor laser element with an oscillation wavelength of 658 nm found high-density formed minute pits having a size smaller than one µm in a track pitch smaller than one µm.

### Example 3

### Optical recording media

Twelve types of optical recording media were prepared similarly as in Example 2 except for replacing TFP with a mixture of TFP and acetone (7:3 by volume) in a higher yield with no damage in dissolution and coating of light absorbents.

In spite of preparing by using a mixture replacing a part of TFP as a fluorine solvent with acetone as a non-fluorine solvent, the optical recording media of the example, which have superior electrical properties such as sensitivity, resolution, and jitter, have a recording capacity of over four GB per one side and can record large amounts of information of documents, images and voices, as well as other digital information at a relatively-high density by using the light pick-up manner with a visible light with a wavelength of 700 nm or shorter, particularly, a laser beam with a wavelength of around 630-680 nm.

### Industrial Applicability

As described above, when the light absorbents of the present invention comprising the first polymethine dye having an organic metal complex anion as a counter ion, the second polymethine dye having an anion other than organic metal complex anion as a counter ion, and a formazane metal complex are used in optical recording media, the sensitivity to a writing light remarkably increases, and, as a result, optical recording having superior electrical properties such as resolution and jitter can be realized even in using a writing light with a relatively-low output power. The optical recording media of the present invention, which the recording layers are composed by the light absorbents and use a visible light with a wavelength of 700 nm or shorter as a writing light, particularly, a laser beam with a wavelength of around 400-450 nm or 630-680 nm, have an advantage that the cost per one bit for recording information can be sharply lowered because they can record large amounts of information of documents, images and voices, as well as other digital information at a relatively-high density in comparison with conventional CD-Rs. As the optical recording media of the present invention have relatively-high sensitivity to a writing light, they have another advantage that they should necessarily regulate laser elements with relatively-high output power in writing information.

The present invention having these outstanding effects and functions is a significant invention that will greatly contribute to this art.

## Claims

1. A light absorbent comprising the first polymethine dye having an organic metal complex anion as a counter ion and a monomethine or polymethine chain intramolecularly; the second polymethine dye having an anion, as a counter ion, other than organic metal complex anions and a monomethine or polymethine chain intramolecularly; and a formazane metal complex.

2. The light absorbent of claim 1, wherein the first polymethine dye is represented by Formula 1: 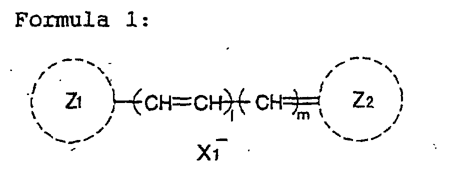 wherein in Formula 1, Z₁ represents an optionally substituted heterocycle; Z₂
represents an optionally substituted heterocycle or aromatic ring which is identical to or different from Z₁; X₁⁻ represents an appropriate organic metal complex anion; and 1 and m represent integers of 0 or 1, respectively, and they are not 0 at the same time.

3. The light absorbent of claim 1 or 2, wherein said organic metal complex anion is an azo organic metal complex anion.

4. The light absorbent of claim 1, 2 or 3, wherein the second polymethine dye is represented by Formula 2: 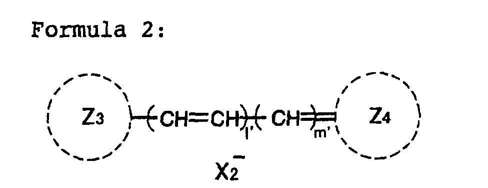 wherein in Formula 2, Z₃ represents an optionally substituted heterocycle; Z₄ represents an optionally substituted heterocycle or aromatic ring which is identical to or different from Z₃; X₂⁻ represents an appropriate organic metal complex anion; and 1' and m' represent integers of 0 or 1, respectively, and they are not 0 at the same time.

5. The light absorbent of claim 1, 2, 3 or 4, wherein said formazane metal complex has a formazane metal compound represented by Formula 3 as a ligand. 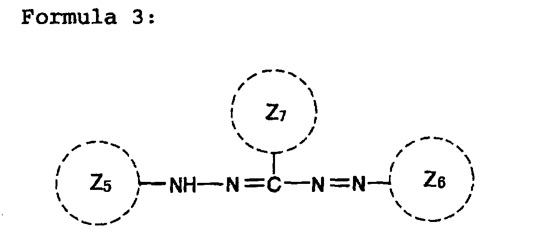 wherein in Formula 3, Z₅ represents an optionally substituted pyridine ring; Z₆ represents an optionally substituted heterocycle or aromatic ring; and Z₇ represents an optionally substituted pyridine ring, furan ring or aliphatic hydrocarbon group.

6. The light absorbent of claim 1, 2, 3, 4 or 5, wherein a weight ratio of the first polymethine dye to the second polymethine dye is one % (w/w) or more.

7. The light absorbent of claim 1, 2, 3, 4, 5 or 6, wherein a weight ratio of the formazane metal complex to the total volume of the first and second polymethine dyes is 0.1 % (w/w) or more.

8. The light absorbent of claim 1, 2, 3, 4, 5, 6 or 7, which substantially absorbs a visible light with a wavelength of 700 nm or shorter when formed in a thin layer.

9. The light absorbent of claim 1, 2, 3, 4, 5, 6, 7 or 8, which comprises one or more other organic dye compounds which substantially absorb a visible light.

10. The light absorbent of claim 9, wherein other organic dye compounds are pentamethine cyanine dyes or heptamethine cyanine dyes.

11. An optical recording medium comprising any one of the light absorbents of claims 1 to 10.

12. The optical recording medium of claim 11, wherein a recording layer is composed of any one of the light absorbents of claims 1 to 10.

13. The optical recording medium of claim 11 or 12, which uses a visible light with a wavelength of 700 nm or shorter as a writing light.

14. The optical recording medium of claim 11, 12 or 13, which uses a laser beam with a wavelength of around 400-450 nm or 630-680 nm as a writing light.

15. In an optical recording medium in which a recording layer is composed of an organic dye compound and which uses a visible light with a wavelength of 700 nm or shorter as a writing light, the improvement wherein said optical recording medium is a thermal-deformation-type optical recording medium comprising any one of the light absorbents of claims 1 to 10.

16. An optical recording medium comprising the first polymethine dye having an organic metal complex anion as a counter ion and a monomethine or polymethine chain intramolecularly; the second polymethine dye having an anion, as a counter ion, other than organic metal complex anions and a monomethine or polymethine chain intramolecularly; and a formazane metal complex.

17. A process for producing an optical recording medium comprising a step of forming a homogeneous thin layer comprising any one of the light absorbents of claims 1 to 10 on a substrate.

18. The process of claim 17 comprising the steps of dissolving a light absorbent in a fluorine solvent or a mixture of a fluorine and non-fluorine solvents and forming a homogeneous thin layer by coating the resulting solution over a substrate.
